# EUROPEAN PATENT APPLICATION

(11) **EP 4 645 464 A1**
(43) Date of publication of application: **05.11.2025**
(21) Application number: 25172467.0
(22) Date of filing: 25.04.2025
(51) Int. Cl.: H01M 4/36, H01M 10/04, H01M 10/0585, H01M 50/105, H01M 50/178, H01M 4/48, H01M 4/583

(54) **ELECTRODE PLATE AND RECHARGEABLE BATTERY INCLUDING THE SAME**

(30) Priority: 29.04.2024 KR 20240057069
(71) Applicant: SAMSUNG SDI CO., LTD., Yongin-si, Gyeonggi-do 17084 (KR)
(72) Inventor: PARK, Seok Gyun, 17084 Yongin-si, Gyeonggi-do (KR)
(74) Representative: Gulde & Partner

(57) **Abstract**

An embodiment of the present disclosure provides an electrode plate including: a substrate; an active material layer on at least a portion of one surface of the substrate and having a multi-stage end portion; and a protective member on at least a portion of the multi-stage end portion of the active material layer and on the substrate such that the protective member does not protrude past the active material layer in a thickness direction.

## Description

### BACKGROUND

### 1. Field

Embodiments of the present disclosure relate to an electrode plate and a rechargeable battery including the same.

### 2. Description of the Related Art

Rechargeable batteries are manufactured to have various suitable shapes, and among them, a pouch battery includes an electrode assembly having a separator (which is an electrical insulator) between positive and negative electrode plates, and a thin flexible pouch in which the electrode assembly is embedded. The pouch accommodates the electrode assembly in an inner space thereof.

The electrode assembly of the rechargeable battery is largely divided into a winding type (or kind) and a stacking type (or kind) according to the structure thereof. The stacking type (or kind) has good structural safety and excellent space utilization, so it is widely applied to small and medium-sized batteries. A stacking type (or kind) rechargeable battery is one in which a plurality of electrode plates and separators are stacked a plurality of times.

Therefore, if the thickness of the electrode plate increases during the manufacturing process of the electrode plate, the thickness of the rechargeable battery may become excessively thick. If the thickness of the center and both sides (e.g., two opposing sides) of the electrode plate are differently manufactured, the thickness of the electrode assembly may be unevenly manufactured, thereby making it difficult for the rechargeable battery to be manufactured to meet the target external specifications.

### SUMMARY

Embodiments of the present disclosure overcome the above-described issues, and an object of embodiments of the present disclosure provides an electrode plate and a rechargeable battery including the same that may uniformly manufacture a thickness of an electrode plate.

However, the technical problem to be solved by the present disclosure is not limited to the above, and other objects not mentioned herein will be understood from the following description by those skilled in the art.

An embodiment of the present disclosure provides an electrode plate including: a substrate; an active material layer on at least a portion of one surface of the substrate and having a multi-stage end portion; and a protective member having one side on at least a portion the multi-stage end portion of the active material layer and another side on the substrate such that the protective member does not protrude past the active material layer in a thickness direction.

The active material layer may include a first active material portion; a second active material portion including: an edge portion along an edge of the first active material portion and on which one surface of the protective member is provided, and a multi-stage portion having a size corresponding to the first active material portion, on the first active material portion, and being higher in height than the edge portion.

An outer surface of the protective member may be on a same line as an outer surface of the edge portion of the second active material portion.

The first active material portion and the second active material portion may be made of the same material.

An outer surface of the protective member may be relatively lower than an outer surface of the edge portion of the second active material portion.

The edge portion of the second active material portion may have a thickness corresponding to a thickness of the first active material portion.

The protective member may have a thin film shape.

The protective member may be a lamination tape.

An edge of the active material layer may be spaced apart from an edge of the substrate.

The active material layer may include a positive electrode active material.

The positive electrode active material may be one selected from a lithium manganese-based oxide, a lithium nickel-based oxide, a lithium cobalt-based oxide, a lithium nickel manganese-based oxide, a lithium nickel cobalt manganese-based oxide, a lithium nickel cobalt aluminum-based oxide, a lithium iron phosphate-based compound, a lithium manganese phosphate-based compound, a lithium cobalt phosphate-based compound, and a lithium vanadium phosphate-based compound.

The active material layer may include a negative electrode active material.

The negative electrode active material may be a material in which lithium ions are able to be intercalated and deintercalated.

For example, the negative electrode active material may be one selected from a carbon-based material such as crystalline carbon, amorphous carbon, a carbon composite, and a carbon fiber, a lithium alloy, silicon (Si), and tin (Sn).

Another embodiment of the present disclosure provides a rechargeable battery including: an electrode assembly including a plurality of electrode plates and a separator, wherein the plurality of electrode plates are stacked with the separator therebetween; and a case that accommodates the electrode assembly.

According to embodiments of the present disclosure, a portion of the electrode plate to which the protective member is attached in the active material layer includes a plurality of stages. Accordingly, the protective member is formed so that the protective member does not protrude relatively outward from the outermost surface of the active material layer, thereby preventing or reducing a local increase in the thickness of the protective member. Therefore, the stacking flatness of the electrode plate may be significantly improved.

### BRIEF DESCRIPTION OF THE DRAWINGS

The accompanying drawings illustrate example embodiments of the present disclosure and together with the foregoing disclosure, serve to provide further understanding of the technical features of embodiments of the present disclosure, and thus, the present disclosure is not construed as being limited to the drawings.
FIG. 1 is a perspective view of a rechargeable battery including an electrode plate according to an embodiment of the present disclosure.
FIG. 2 is a cross-sectional view of an electrode plate extracted from the rechargeable battery of FIG. 1.
FIG. 3 to FIG. 5 are cross-sectional views sequentially illustrating a process of manufacturing an electrode plate.

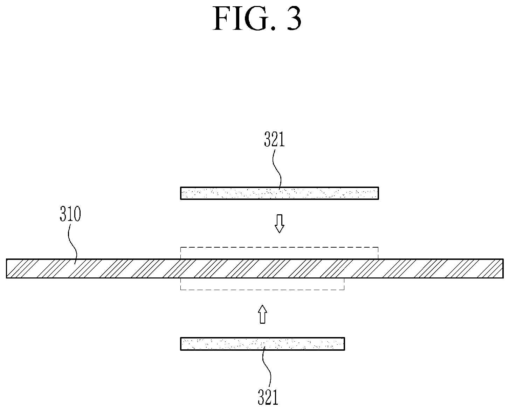

FIG. 3 illustrates a cross-sectional view of a state in which a first active material portion is provided on a substrate.

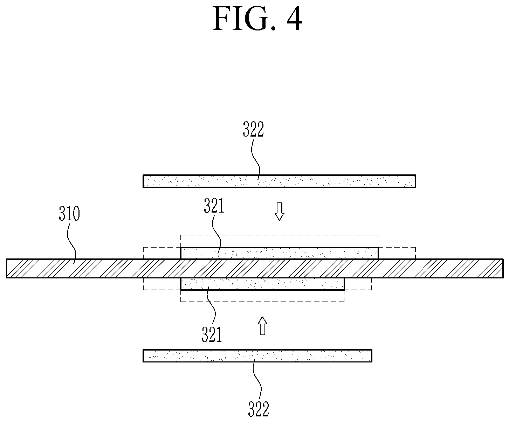

FIG. 4 illustrates a cross-sectional view of a state in which a second active material portion is provided on a substrate and a first active material portion.

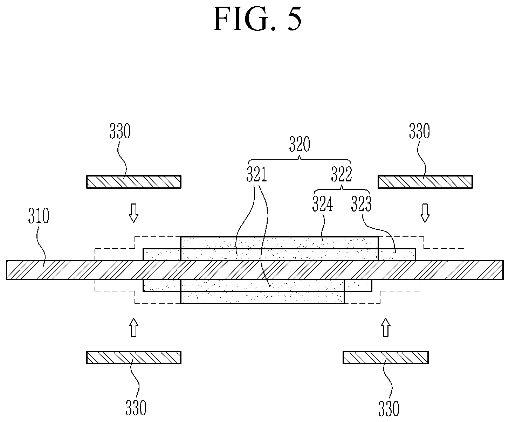

FIG. 5 illustrates a cross-sectional view of a state in which a protective member is attached to a boundary portion between an active material layer and a substrate.

### DETAILED DESCRIPTION

Hereinafter, embodiments of the present disclosure will be described in more detail with reference to the accompanying drawings. In the description, it should be understood that terms and words used in the specification and the appended claims should not be construed as having common and dictionary meanings, but should be interpreted as having meanings and concepts corresponding to technical ideas of the present disclosure in view of the principle that the inventor can properly define the concepts of the terms and words in order to describe his/her own invention as best as possible. Accordingly, because the embodiments described in the specification and the configurations shown in the drawings are merely example embodiments and configurations of the subject matter of the present disclosure, they do not represent all of the technical ideas of the present disclosure, and it should be understood that that various suitable equivalents and modified examples, which may replace the disclosed embodiments, are possible.

It will be further understood that the terms "comprise, include," "comprising," and/or "including," if used in this specification, specify the presence of the stated features, integers, steps, operations, elements, and/or components but do not preclude the presence or addition of one or more other features, integers, steps (e.g., acts or tasks), operations, elements, components, and/or groups thereof.

In order to help understanding of the subject matter of the present disclosure, the accompanying drawings may not be drawn to scale, and the dimensions of some components may be exaggerated. In embodiments, the same reference numerals may be assigned to the same elements in different embodiments.

If it is explained that two objects are 'identical', this means that these objects are 'substantially identical'. Accordingly, the substantially identical objects may include deviations considered low in the art, for example, deviations within 5%. In embodiments, if it is explained that certain parameters are uniform in a set or predetermined region, this may mean that the parameters are uniform (e.g., substantially uniform) in terms of an average in the corresponding region.

Although the terms "first", "second", and the like are used to describe various constituent elements, these constituent elements are not limited by these terms. These terms are used to distinguish one element from another, and unless stated to the contrary, a first element may be a second element.

Throughout the specification, unless stated otherwise, each element may be singular or plural.

If an element is "above (or under)" or "on (or below)" another element, the element can be on an upper surface (or a lower surface) of the other element, and intervening elements may be present between the element and the other element on (or below) the element.

In embodiments, if an element is referred to as "on," "connected to," or "coupled to" another element, the element can be directly connected or coupled to the other element, but it should be understood that intervening elements may be present between each element, or each element may be "connected", "coupled" or "linked" to each other through another element.

As used herein, the term "and/or" includes any and all combinations of one or more of the associated listed items. Further, the use of "may" if describing embodiments of the present disclosure refers to "one or more embodiments of the present disclosure."

Expressions such as "at least one of," if preceding a list of elements, modify the entire list of elements and do not modify the individual elements of the list.

Throughout the specification, unless specifically stated to the contrary, the expression "A and/or B" denotes A, B, or A and B, and the expression "C to D" denotes C or more and D or less.

The expression "at least one of A, B, and C," "at least one of A, B, or C," and "at least one selected from the group consisting of A, B, and C" indicates only A, only B, only C, both A and B, both A and C, both B and C, all of A, B, and C, or variations thereof.

As used herein, the terms "use," "using," and "used" may be considered synonymous with the terms "utilize," "utilizing," and "utilized," respectively. As used herein, the term "substantially," "about," and similar terms are used as terms of approximation and not as terms of degree, and are intended to account for the inherent variations in measured or calculated values that would be recognized by those of ordinary skill in the art.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the scope of the present disclosure.

Spatially relative terms, such as "beneath," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below.

The terminology used herein is for the purpose of describing example embodiments and is not intended to be limiting of the present disclosure.

Hereinafter, a rechargeable battery including an electrode plate will be described in more detail before describing an electrode plate according to an embodiment of the present disclosure with reference to the accompanying drawings.

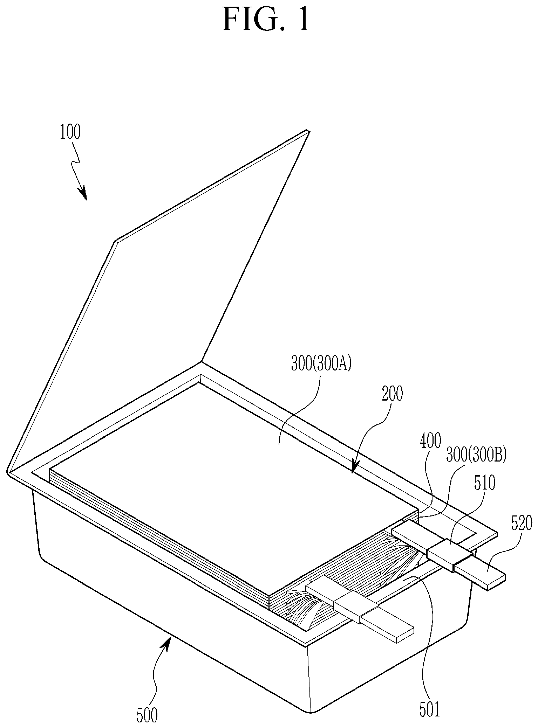

FIG. 1 illustrates a perspective view of a rechargeable battery including an electrode plate according to an embodiment of the present disclosure.

Referring to FIG. 1, a rechargeable battery 100 may include an electrode assembly 200 and a case 500.

The electrode assembly 200 includes a plurality of electrode plates 300A and 300B and a separator 400. For example, the plurality of electrode plates 300A and 300B may include a first electrode plate 300A and a second electrode plate 300B.

The electrode assembly 200 may have a form in which a laminate including the first electrode plate 300A, the second electrode plate 300B, and the separator 400 is repeatedly wound or stacked.

For example, the electrode assembly 200 may be a stacking type (or kind) in which the electrode plates 300A and 300B are stacked in a plurality of layers. In embodiments, the electrode assembly 200 may be a jelly-roll type (or kind) that is repeatedly wound. In the present disclosure, the electrode assembly 200 of the stacking type (or kind) will be described as an example, but the present disclosure is not limited thereto.

In embodiments, the manufacturing process of the electrode assembly 200 of the stacking type (or kind) generally includes a first stacking process and a second process.

In the first stacking process, a full cathode and a full anode may be stacked. In embodiments, the full cathode may be the remaining ones excluding the outermost first electrode plate 300A among the plurality of first electrode plates 300A. In embodiments, the full anode may be the second electrode plate 300B.

In the second stacking process, a half cathode may be stacked on one or more of both outermost sides based on the stacking direction. In embodiments, the half cathode may be the outermost first electrode plate 300A among the first electrode plates 300A.

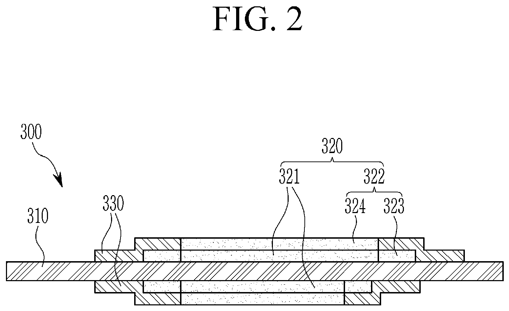

For convenience, FIG. 2 illustrates the electrode assembly 200 in which a half cathode is stacked at an upper outermost portion of the electrode assembly 200, but a half cathode may be stacked at an upper outermost portion and an outermost portion of both sides (e.g., two opposing sides) of the electrode assembly 200, respectively.

In embodiments, the full cathode and the full anode are those in which an active material is applied to both sides (e.g., two opposing sides) of the substrate, and the half cathode is one in which an active material layer is on only one side of the substrate. Detailed descriptions of the full cathode, the full anode, and the half cathode may not be repeated below.

The separator 400 may be between the first electrode plate 300A and the second electrode plate 300B. The separator 400 prevents a short circuit (or reduces a likelihood or occurrence thereof) between the first electrode plate 300A and the second electrode plate 300B, and enables the movement of lithium ions. In embodiments, the separator 400 may have a size relatively larger than that of the first electrode plate 300A and the second electrode plate 300B.

The separator 400 may include a porous polymer film and/or a porous non-woven fabric. In embodiments, the porous polymer film may be configured as a single layer or a multilayer including a polyolefin-based polymer such as an ethylene polymer, a propylene polymer, an ethylene/butene copolymer, an ethylene/hexene copolymer, and/or an ethylene/methacrylate copolymer. The porous non-woven fabric may include a glass fiber having a high melting point and a polyethylene terephthalate fiber. However, the present disclosure is not limited thereto, and in some embodiments, the separator may be a ceramic coated separator (CCS) including ceramic.

The separator 400 may be cut into a unit length and provided between the first electrode plate 300A and the second electrode plate 300B, or one ribbon-shaped separator 400 may be between the first electrode plate 300A and the second electrode plate 300B in a zigzag shape. In embodiments, the separator 400 may be installed to be wound in one direction between the first electrode plate 300A and the second electrode plate 300B.

As such, the form of the separator 400 is not limited to a specific form, but in the present disclosure, an embodiment in which the separator 400 is cut into unit lengths to be provided between the first electrode plate 300A and the second electrode plate 300B will be described as an example, but the present disclosure is not limited thereto.

The case 500 may accommodate the electrode assembly 200. The electrode assembly 200 described above is accommodated in the case 500 together with an electrolyte.

In embodiments, the electrolyte may be a non-aqueous electrolyte. The electrolyte may contain a lithium salt and an organic solvent. The organic solvent may include at least one selected from propylene carbonate (PC), ethylene carbonate (EC), diethyl carbonate (DEC), dimethyl carbonate (DMC), ethylmethyl carbonate (EMC), methylpropyl carbonate (MPC), dipropyl carbonate (DPC), vinylene carbonate (VC), dimethyl sulfoxide, acetonitrile, dimethoxyethane, diethoxyethane, sulfolane, gamma-butyrolactone, propylene sulfide, and tetrahydrofuran.

In embodiments, the case 500 may be one of a pouch type (or kind), a cylindrical type (or kind), and a prismatic type (or kind). The pouch-type (or kind) case 500 may be manufactured by bending plate-shaped exterior materials to face each other, then pressing or drawing one surface thereof to include a recess on one surface thereof.

The electrode assembly 200 is accommodated in the recess. A sealing portion 501 is provided on the outer periphery of the recess, and the sealing portion 501 is sealed using a method such as, for example, heat fusion while the electrode assembly 200 is accommodated in the recess.

In embodiments, in a plurality of electrode plates, the first electrode plate 300A described above may be a negative electrode, and the second electrode plate 300B may be a positive electrode, or vice versa. The first electrode plate 300A and the second electrode plate 300B may be electrically connected or coupled to the outside of the rechargeable battery 100 through a strip terminal 520.

In embodiments, an insulating tape 510 may be attached to a portion of the strip terminal 520 that is in contact with the case 500. The insulating tape 510 may prevent or reduce conduction of electricity through or by the strip terminal 520 and the case 500.

Hereinafter, electrode plates and according to an embodiment of the present disclosure will be described in more detail with reference to the accompanying drawings.

FIG. 2 illustrates a cross-sectional view of an electrode plate extracted from the rechargeable battery of FIG. 1.

Referring to FIG. 2, an electrode plate 300 according to an embodiment of the present disclosure includes a substrate 310, an active material layer 320, and a protective member 330.

The substrate 310 may be a current collector, and the current collector may include any suitable conductive material (e.g., electrically conductive material) within a range that does not cause a chemical reaction in the rechargeable battery (e.g., that does not cause an undesirable chemical reaction in the rechargeable battery). For example, the current collector may include one of stainless steel, nickel (Ni), aluminum (Al), titanium (Ti), copper (Cu), and/or an alloy thereof, and may be provided in various suitable forms such as a film, a sheet, and/or a foil.

In embodiments, the substrate 310 may include a current collector and an uncoated region.

The active material layer 320 may be applied to at least one surface of the current collector. The active material layer 320 may be applied to the remaining portions except for an edge area of the current collector. In embodiments, the edge area of the current collector may be an uncoated region to which the active material layer 320 is not applied.

The active material layer 320 is on at least a portion of one surface of the substrate 310, and has multi-stage ends. An edge of the active material layer 320 may be spaced apart from an edge of the substrate 310. Accordingly, the protective member 330 to be further described below may be attached to a boundary portion between the active material layer 320 and the substrate 310.

A method of providing the active material layer 320 on the substrate 310 may be, for example, a method using a slit coater, but is not limited thereto, and various suitable slurry (active material) coating methods may be used. In embodiments, a method of attaching the active material layer 320 in the form of a film to the substrate 310 may be possible.

In embodiments, the active material layer 320 may further include a binder and a conductive material (e.g., an electrically conductive material).

The binder mediates a bond between the substrate 310 and the active material, thereby improving mechanical stability. For example, the binder may be an organic binder or an aqueous binder, and may be used together with a thickener such as carboxymethyl cellulose (CMC). In embodiments, the organic binder may be one selected from vinylidene fluoride-hexafluoropropylene copolymer (PVDF-co-HFP), polyvinylidene fluoride (PVDF), polyacrylonitrile, and polymethylmethacrylate, and the aqueous binder may be styrenebutadiene rubber (SBR), but embodiments of the present disclosure are not limited thereto.

The conductive material may improve electrical conductivity of the rechargeable battery. The conductive material may include a metal-based material. In embodiments, the conductive material may include any suitable carbon-based conductive material. In embodiments, the conductive material may include one selected from graphite, carbon black, graphene, and carbon nanotube. In some embodiments, the conductive material may include carbon nanotubes, but is not limited thereto.

The protective member 330 is attached to the boundary between the substrate 310 and the active material layer 320 to prevent or reduce movement or deformation of the active material layer 320 with respect to the substrate 310. For this purpose, one side of the protective member 330 is provided in a multi-stage portion of the active material layer 320, and the other side thereof is on the substrate 310. The protective member 330 is provided so as not to protrude to the outside of the active material layer 320 (e.g., so as not to protrude above the active material layer 320 in a thickness direction from the substrate 310).

As described above, the protective member 330 may be attached to the boundary portion between the active material layer 320 and the substrate 310. The protective member 330 may have a thin film shape. The protective member 330 may be, for example, a lamination tape.

As described above, the electrode plate 300 according to an embodiment of the present disclosure as described above includes the active material layer 320 including a multi-stage end, and the protective member 330 is attached to the multi-stage portion of the active material layer 320. Accordingly, it is possible to prevent or reduce protrusion of the protective member 330 from the active material layer 320 to the outside.

The active material layer 320 for this purpose may include, for example, a first active material portion 321 and a second active material portion 322.

The first active material portion 321 may be on a portion of the substrate 310.

The second active material portion 322 may include an edge portion 323 and a multi-stage portion 324.

The edge portion 323 is along the edge of the first active material portion 321. A portion of the protective member 330 is on the edge portion 323. The edge portion 323 of the second active material portion 322 may have a thickness corresponding to a thickness of the first active material portion 321.

In embodiments, a width of the edge portion 323 may be about 2 mm. For example, the edge portion 323 may be along the entire edge of the first active material portion 321 and have a width of 2 mm.

The multi-stage portion 324 has a size corresponding to that of the first active material portion 321, and is on the first active material portion 321. The multi-stage portion 324 is provided at a higher height relative to the edge portion 323. As described above, the edge portion 323 is at the edge of the first active material portion 321, and the multi-stage portion 324 is on the first active material portion 321. Accordingly, the vertical cross sections of the edge portion 323 and the multi-stage portion 324 may have a step shape.

One side of the above-described protective member 330 may be attached to a multi-stage portion between the multi-stage portion 324 and the edge portion 323.

In embodiments, if the protective member 330 and the multi-stage portion 324 are manufactured to have the same thickness, the outer surface of the protective member 330 may be on the same line as the outer surface of the edge portion 323 of the second active material portion 322.

In embodiments, it may be possible for the protective member 330 to be manufactured thinner than the thickness of the multi-stage portion 324 so that the outer surface of the protective member 330 is provided relatively lower than the outer surface of the edge portion 323 of the second active material portion 322.

In embodiments, the first active material portion 321 and the second active material portion 322 described above may be the same material.

The first active material portion 321 and the second active material portion 322 may be made of the same material, but are not limited thereto, and the first active material portion 321 and the second active material portion 322 may be made of different materials. In embodiments, the first active material portion 321 may be a material having relatively greater adhesion to the substrate or greater conductivity (e.g., electrical conductivity) than the second active material portion 322.

For example, the first active material portion 321 includes a carbon-based conductive material (e.g., a carbon-based electrically conductive material). The carbon-based conductive material included in the first active material portion 321 may be selected from the carbon-based conductive materials included in the active material layer. The first active material portion 321 may include the same carbon-based conductive material as the second active material portion 322. Because the first active material portion 321 includes a carbon-based conductive material, the first active material portion 321 may be, for example, a conductive layer (e.g., an electrically conductive layer). The first active material portion 321 may be, for example, a conductive layer including a binder and a carbon-based conductive material (e.g., a carbon-based electrically conductive material).

The binder included in the first active material portion 321 may increase a binding force between the substrate 310 and the second active material portion 322. The binder included in the first active material portion 321 is, for example, a conductive binder or a nonconductive binder (e.g., an electrically and/or ionically insulating binder).

The conductive binder is, for example, an ion conductive binder and/or an electron conductive binder. A binder having both ion conductivity and electron conductivity may be included in the ion conductive binder and also in the electron conductive binder.

The ion conductive binder may be, for example, polystyrene sulfonate (PSS), polyvinylidene fluoride-hexafluoropropylene (PVDF-HFP), polyvinyl fluoride (PVF), polyvinylidene fluoride (PVDF) ), polymethyl methacrylate (PMMA, poly(methylmethacrylate), polyethylene oxide (PEO, polyethylene oxide), polyethylene glycol (PEG), polyacrylonitrile (PAN), polytetrafluoroelene (PTFE), polyethylenedioxythiophene (PEDOT), polypyrrole (PPY), polyacrylonitrile (PAN), polyaniline, polyacetylene, and/or the like. The ion conductive binder may include a polar functional group. The ion conductive binder including the polar functional group may be, for example, Nafion, Aquivion, Flemion, Gore, Aciplex, Morgane ADP, sulfonated poly(ether ketone) (SPEEK), sulfonated poly(arylene ether ketone ketone sulfone) (SPAEKKS), sulfonated poly(aryl ether ketone (SPAEK), poly[bis(benzimidazobenzisoquinolinones)] (SPBIBI), poly(styrene sulfonate) (PSS), lithium 9, 10-diphenylanthracene-2-sulfonate (DPASLi+), and/or the like.

The electron conductive binder may be, for example, polyacetylene, polythiophene, polypyrrole, poly(p-phenylene), poly(phenylenevinylene), poly(phenylenesulfide), polyaniline, and/or the like. A middle layer may be, for example, a conductive layer (e.g., an electrically and/or ionically conductive layer) including a conductive polymer (e.g., an electrically and/or ionically conductive polymer).

The binder included in the first active material portion 321 may be selected from the binders included in the second active material portion 322. For example, the first active material portion 321 may include the same binder as the second active material portion 322. The binder included in the first active material portion 321 may be, for example, a fluorine-based binder, and the fluorine-based binder may be, for example, polyvinylidene fluoride (PVDF).

In embodiments, if the electrode plate 300 is a positive electrode plate, the active material layer 320 including the first active material portion 321 and the second active material portion 322 may include a positive electrode active material. The positive electrode active material may be a material in which lithium (Li) ions may be intercalated and deintercalated.

The positive electrode active material may be a lithium metal oxide. For example, the positive electrode active material may be one selected from a lithium manganese-based oxide, a lithium nickel-based oxide, a lithium cobalt-based oxide, a lithium nickel manganese-based oxide, a lithium nickel cobalt manganese-based oxide, a lithium nickel cobalt aluminum-based oxide, a lithium iron phosphate-based compound, a lithium manganese phosphate-based compound, a lithium cobalt phosphate-based compound, and a lithium vanadium phosphate-based compound, but is not necessarily limited to a specific example.

Contrary to the above, if the electrode plate 300 is a negative electrode active plate, the active material layer 320 may include a negative electrode active material. The negative electrode active material may be a material in which lithium ions may be intercalated and deintercalated. For example, the negative electrode active material may be one selected from a carbon-based material such as crystalline carbon, amorphous carbon, a carbon composite, and a carbon fiber, a lithium alloy, silicon (Si), and tin (Sn). In some embodiments, the negative electrode active material may be natural graphite and/or artificial graphite, but is not limited to specific examples.

A manufacturing process of the electrode plate 300 according to the embodiment of the present disclosure as described above will be described with reference to the accompanying drawings.

FIG. 3 to FIG. 5 are cross-sectional views sequentially illustrating a process of manufacturing an electrode plate. For example, FIG. 3 illustrates a cross-sectional view of a state in which a first active material portion is on a substrate.

Referring to FIG. 3, the first active material portion 321 is on the substrate 310. A method of providing the first active material layer 320 on the substrate 310 may be, for example, a method of coating by coating a slurry on the substrate 310 using coating equipment such as a slit coater. In embodiments, a method of attaching the first active material portion 321 in the form of a film to the substrate 310 may be possible.

FIG. 4 illustrates a cross-sectional view of a state in which a second active material portion is on a substrate and a first active material portion.

Referring to FIG. 4, as described above, after the first active material portion 321 is provided on the substrate 310, the second active material portion 322 is provided on the substrate 310 and the first active material portion 321.

In embodiments, the slurry used to form the second active material portion 322 is applied on the substrate 310 in an area relatively larger than that of the first active material portion 321. In embodiments, a portion of the second active material portion 322 may be on the first active material portion 321 to become the multi-stage portion 324, and the remaining portion thereof may be provided along the edge of the first active material portion 321 on the substrate 310 to become the edge portion 323.

In embodiments, the method of providing the first active material portion 321 and the second active material portion 322 on the substrate 310 is not limited to a specific method, and any suitable method may be used as long as the second active material portion 322 may be separated into the edge portion 323 and the multi-stage portion 324.

FIG. 5 illustrates a cross-sectional view of a state in which a protective member is attached to a boundary portion between an active material layer and a substrate.

Referring to FIG. 5, one end of the protective member 330 is finally provided adjacent to the end portion of the multi-stage portion 324 of the second active material portion 322, and the protective member 330 is attached to the edge portion 323 and the substrate 310.

As described above, the electrode plate 300 according to an embodiment of the present disclosure has a multi-stage portion of the active material layer 320 to which the protective member 330 is attached. Accordingly, the protective member 330 is provided so that it does not protrude relatively to the outside of the outermost surface of the active material layer 320, thereby preventing or reducing a local increase in the thickness of the protective member 330. Accordingly, the stacking flatness of the electrode plate 300 may be significantly improved.

Although several embodiments of the present disclosure have been described above, and while the subject matter of this disclosure has been described in connection with what is presently considered to be practical embodiments, it is to be understood that the disclosure is not limited to the disclosed embodiments, but, on the contrary, is intended to cover various suitable modifications and equivalent arrangements included within the scope of the appended claims and equivalents thereof. Therefore, those skilled in the art will understand that various suitable modifications and other equivalent embodiments of the present disclosure are possible. Consequently, the true technical protective scope of the present disclosure must be determined based on the technical features of the appended claims, and equivalents thereof.

### Description of Symbols

| | | | |
|---|---|---|---|
| 100: | rechargeable battery | 200: | electrode assembly |
| 300: | electrode plate | 310: | substrate |
| 320: | active material layer | 321: | first active material portion |
| 322: | second active material portion | 323: | edge portion |
| 324: | multi-stage portion | 330: | protective member |
| 400: | Separator | 500: | case |

## Claims

1. An electrode plate (300, 300A, 300B) comprising:
a substrate (310);
an active material layer on at least a portion of one surface of the substrate (310) and having a multi-stage end portion; and
a protective member (330) having one side on at least a portion of the multi-stage end portion of the active material layer and another side on the substrate (310) such that the protective member (330) does not protrude past the active material layer in a thickness direction.

2. The electrode plate (300, 300A, 300B) as claimed in claim 1, wherein:
the active material layer comprises:
a first active material portion (321); and
a second active material portion (322) comprising:
an edge portion (323) along an edge of the first active material portion (321) and on which one surface of the protective member (330) is provided, and
a multi-stage portion (324) having a size corresponding to the first active material portion (321), on the first active material portion (321), and being higher in height than the edge portion (323).

3. The electrode plate (300, 300A, 300B) as claimed in claim 2, wherein:
an outer surface of the protective member (330) is on a same line as an outer surface of the edge portion (323) of the second active material portion (322).

4. The electrode plate (300, 300A, 300B) as claimed in claim 2 or 3, wherein:
the first active material portion (321) and the second active material portion (322) are made of the same material.

5. The electrode plate (300, 300A, 300B) as claimed in claim 2 or 4, wherein:
an outer surface of the protective member (330) is relatively lower than an outer surface of the edge portion (323) of the second active material portion (322).

6. The electrode plate (300, 300A, 300B) as claimed in claims 2 to 5, wherein:
the edge portion (323) of the second active material portion (322) has a thickness corresponding to a thickness of the first active material portion (321).

7. The electrode plate (300, 300A, 300B) as claimed in claims 1 to 6, wherein:
the protective member (330) has a thin film shape.

8. The electrode plate (300, 300A, 300B) as claimed in claims 1 to 7, wherein:
the protective member (330) is a lamination tape.

9. The electrode plate (300, 300A, 300B) as claimed in claims 1 to 8, wherein:
an edge of the active material layer is spaced apart from an edge of the substrate (310).

10. The electrode plate (300, 300A, 300B) as claimed in claims 1 to 9, wherein:
the active material layer comprises a positive electrode active material.

11. The electrode plate (300, 300A, 300B) as claimed in claim 10, wherein:
the positive electrode active material is one selected from a lithium manganese-based oxide, a lithium nickel-based oxide, a lithium cobalt-based oxide, a lithium nickel manganese-based oxide, a lithium nickel cobalt manganese-based oxide, a lithium nickel cobalt aluminum-based oxide, a lithium iron phosphate-based compound, a lithium manganese phosphate-based compound, a lithium cobalt phosphate-based compound, and a lithium vanadium phosphate-based compound.

12. The electrode plate (300, 300A, 300B) as claimed in claims 1 to 11, wherein the active material layer comprises a negative electrode active material.

13. The electrode plate (300, 300A, 300B) as claimed in claim 12, wherein:
the negative electrode active material is a material in which lithium ions are able to be intercalated and deintercalated, and
the negative electrode active material is one selected from a carbon-based material such as crystalline carbon, amorphous carbon, a carbon composite, and a carbon fiber, a lithium alloy, silicon (Si), and tin (Sn).

14. A rechargeable battery (100) comprising:
an electrode assembly (200) comprising a plurality of electrode plates (300, 300A, 300B) and a separator (400), wherein the plurality of electrode plates (300, 300A, 300B) are stacked with the separator (400) therebetween; and
a case (500) that accommodates the electrode assembly (200),
each of the plurality of electrode plates (300, 300A, 300B) is the electrode plate (300, 300A, 300B) as claimed in claims 1 to 13.

15. A rechargeable battery (100) as claimed in claim 14, wherein a first electrode plate (300A) and a second electrode plate (300B) is electrically connected or coupled to the outside of the rechargeable battery (100) through a strip terminal (520), wherein an insulating tape (510) is attached to a portion of the strip terminal (520) that is in contact with the case (500), wherein the insulating tape (510) prevents or reduces conduction of electricity through or by the strip terminal (520) and the case (500).
